# EUROPEAN PATENT APPLICATION

(11) **EP 2 339 327 A1**
(43) Date of publication of application: **29.06.2011**
(21) Application number: 09180524.2
(22) Date of filing: 23.12.2009
(51) Int. Cl.: G01N 21/27, G01N 21/25, G01N 15/02, G01N 35/00

(54) **Automatic test for imaging units**

(71) Applicant: F. Hoffmann-La Roche AG, 4070 Basel (CH); Roche Diagnostics GmbH, 68305 Mannheim (DE)
(72) Inventor: Durrer, Fabian, 6343 Rotkreuz (CH)
(74) Representative: Poredda, Andreas

(57) **Abstract**

The present invention refers to a system for imaging biological samples comprising an imaging unit for imaging samples in cuvettes, a cuvette handling unit for transporting cuvettes containing samples to be imaged into an imaging position, a reusable test target and a controlling unit being set up to take images of the reusable test target , to evaluate said images of the reusable test target, to check from the result of said image evaluation whether the imaging unit is system-conform and to interrupt at least temporarily cuvette transport and/or sample imaging if the imaging unit is found to be non-system-conform.

## Description

### Field of the Invention

The invention relates to an automated system and method for imaging biological samples, in particular to urine sediment analyzers.

### Background of the Invention

Urine samples are commonly analyzed using urine test strip readers and urine sediment analyzers. A urine test strip reader is an analyzer that performs a chemical analysis of the urine by using test elements as known in the art. Urine sediment analyzers use imaging units comprising a detector such as a camera and/or optics such as a microscope to detect the presence of particulates and may be able to identify and classify the particulates. In one example the urine may be examined while it flows through a capillary. In another example of a urine sediment analyzer, the sediments are deposited onto a cuvette bottom and are then examined using a camera and/or microscope. Some urine sediment analyzers are able to operate automatically, and are able to identify urine sediments using pattern recognition software. For example urine sediment analyzers are able to distinguish between different cell types such as red blood cells and bacteria.

Normally, the imaging units of analytical instruments need to be calibrated in order to make the analysis reliable. For example there might be artifacts from two-dimensional images caused by variations in the pixel-to-pixel sensitivity of the detector and/or by distortions of the optical path, affecting e.g. focusing and resolution. Typically a standard calibration procedure is carried out at the time the imaging unit is assembled in the analytical instrument, i.e. at the moment of manufacturing, and is not repeated during the working life of the instrument unless a problem has been recognized. This means that an automated instrument may operate for a long time, before an inconsistency in the results and fall in quality due to systematic errors of the imaging unit is detected. This means that the analysis may be misleading, thus leading to the wrong diagnosis. Moreover, samples may be lost without the possibility to repeat the analysis.

The present invention solves the above mentioned problem by providing a system, which integrates a control unit for checking whether the imaging unit is system-conform and for interrupting further sample processing if the imaging unit is non-system-conform.

Another advantage of the present invention is that the system may calibrate itself and only if a status of system-conformity cannot be assigned a call for service is prompted.

### Description of the Invention

The present invention refers to a system for imaging biological samples comprising an imaging unit for imaging samples in cuvettes, a cuvette handling unit for transporting cuvettes containing samples to be imaged into an imaging position, a reusable test target and a controlling unit being set up to take images of the reusable test target, to evaluate said images of the reusable test target, to check from the result of said image evaluation whether the imaging unit is system-conform and to interrupt at least temporarily cuvette transport and/or sample imaging if the imaging unit is found to be non-system-conform.

The system according to the present invention is an apparatus assisting users with the detection, e.g. classification and/or qualitative and/or quantitative optical evaluation of biological samples for diagnostic purpose. An example of such an instrument is a urine sediment analyzer for imaging urine samples.

A urine sediment analyzer is defined herein to describe an apparatus which detects the presence of particulates in urine using optical means. The term urine sediment analyzer is used even if the particulates do not form a sediment during the analysis of the urine. A sediment analysis result as used herein is any test result or analysis from an analyzer which optically detects particles in urine.

The system of the invention is particularly suited for urine samples, but could be used in principle for other biological samples as well. Samples may include body fluids such as blood, plasma or serum and any other fluid of interest as long as imaging of samples takes place for the determination of at least one characteristic of the fluid such as the identity, the presence or absence, the quantity, the morphology of particulate matter contained therein for diagnostic purpose. In one embodiment, the system of the invention is used for analyzing sediments from urine samples by image evaluation. Examples of particulates which may be contained in such sediments are: erythrocytes, leukocytes, bacteria, fungi, yeast cells, epithelial cells, small round cells, casts, clumps, crystals, etc...having a medium particle size in a range from a few micrometer up to about 100 micrometer.

According to one embodiment, samples are introduced into the system contained in sample tubes. The sample tubes may be contained in sample tube racks carrying e.g. up to 5 sample tubes or more. The system may thus contain a rack loading area for loading one or several rack at a time into the system. The system may further comprise a transportation unit, such as e.g. a conveyor or a robotic arm with a gripper, to transport racks or single sample tubes from one unit of the system to another.

According to one embodiment, the system comprises a pipetting unit for introducing aliquots of samples from sample tubes into cuvettes. The pipetting unit may comprise a single or multi-pipetting channel and may comprise one or more reusable and washable needles such as steel needles or may use disposable tips. The pipetting unit may be capable of moving in at least two of three orthogonal directions.

According to another embodiment samples are introduced into the system directly contained in cuvettes.

According to a preferred embodiment the system comprises a cuvette loading area for introducing one or several cuvettes at a time. For example the cuvettes may be loaded into the cuvette loading area as a stack or array, e.g. of up to 50 or more cuvettes, e.g. sealed in a sterile container or pack which is opened at the moment of loading. Several of these containers each containing several cuvettes may be loaded at one time into the cuvette loading area.

The system may further comprise sensors, e.g. a barcode reader, to identify the type of tube and/or cuvette and/or to identify the samples. Alternative technologies such as RFID may also be used for identification.

According to the invention a cuvette is a disposable container adapted for imaging a liquid contained therein and particularly particulates contained in the liquid. Said container is typically made of an injection molded plastic material and comprises an upper part having a transparent upper window part, a lower part adjoining the upper part, said lower part having a transparent lower window part, an imaging space located between the upper window part and the lower window part, an inlet aperture for introducing the liquid into the imaging space, and an outlet aperture for allowing air to escape from the container during liquid introduction. The upper window part and the lower window part are preferably parallel to each other and the distance between them is preferably small, e.g. in the millimeter or sub-millimeter range. The imaging space corresponds to that volume of the container containing the liquid sample and subjected to imaging and image evaluation, that is the volume of the container being illuminated and comprised in the field of view of the detector when the cuvette is in the imaging position. An example of suitable cuvette is disclosed e.g. in W02008050165.

An imaging unit according to the present invention is an image acquiring device comprising an automatic microscope having e.g. a condenser lens and an objective lens, a detector aligned with the microscope, an illumination assembly comprising a light source such as a lamp, and a stage comprising an examination area. According to the present invention, a detector is an imaging device comprising an optical sensor, the optical sensor comprising multiple light sensitive elements, e.g. an array of photoelectric sensors, to obtain digital images of the samples. An example of detector is a camera with a CCD or CMOS sensor. The illumination assembly, condenser lens, objective lens, and detector may advantageously be optically arranged so that the illumination assembly illuminates the imaging space of a cuvette when it is in the imaging position through the condenser lens and the image of any sample sediment within the cuvette space is captured through the objective lens by the camera detector. An image processor may be coupled to receive data from the detector by an image bus.

According to the invention the system comprises a cuvette handling unit for transporting cuvettes containing samples to be imaged into the imaging position of the imaging unit. The cuvette handling unit may be embodied as a conveyor moving in at least one direction or as a robotic arm capable of performing translation movements along one or more of possible orthogonal axis, or capable of performing rotational movement along at least a sector of a circle laying on an xy plane parallel to the plane of the imaging unit stage, driven by one or more electrical motors. According to one embodiment the cuvette handling unit comprises a cuvette section for receiving and transporting at least one cuvette at a time. The cuvette section may be embodied as a gripper with side arms complementary to the shape of a cuvette or as a frame with empty space inside to be occupied by a cuvette and for allowing illumination and imaging of the cuvette, the frame being open at least partially at least along one of the edges. The frame may comprise guiding and holding elements for allowing a cuvette to be inserted and removed by a sliding movement.

Alternatively the frame may just embrace the cuvette within its perimeter and transport the cuvette by dragging the cuvette over the microscope stage, the imaging position corresponding to a hole in the microscope stage having a cross-area smaller that the cuvette cross-area.

According to one embodiment the system comprises a cuvette feeder for feeding cuvettes to the cuvette handling unit, e.g. by pushing a cuvette into the cuvette receiving section of the cuvette handling unit. The cuvette feeder may be located in the cuvette loading area or between the cuvette loading area and the cuvette handling unit, e.g. embodied as a conveyor or transportation chain transporting cuvettes one after another.

A sample may be introduced into a cuvette either by aligning the pipetting unit with a cuvette that has already been fed into the cuvette handling unit or by aligning the cuvette pipetting unit with a cuvette in the cuvette feeder before the cuvette is fed to the cuvette handling unit.

According to a preferred embodiment, the cuvette handling unit is a robotic arm capable of assuming, e.g. by rotational movement at least two operational positions, one feeding position wherein the cuvette receiving section is aligned with the cuvette feeder for receiving one cuvette and one imaging position wherein the cuvette in the cuvette section is aligned with the examination area of the stage.

The system of the invention preferably comprises also a cuvette disposal mechanism for disposing cuvettes after sample imaging. The cuvette disposal mechanism is operatively connected to the cuvette handling unit so that a cuvette is disposed into a waste compartment by pulling the cuvette out of the cuvette section when the waste compartment and the cuvette section are aligned in a third disposal position. Alternatively, in case the cuvette section is an embracing frame for dragging the cuvette over the microscope stage, the cuvette disposal mechanism may be embodied as a hole in the microscope stage in correspondence of the waste compartment, the cross-area of which is larger than the cuvette cross-area, so that the cuvette falls by gravity into the waste compartment when dragged above this hole.

According to one embodiment the cuvette feeder may be divided into a first portion operatively connected to the cuvette loading area and a second portion operatively connected to the cuvette handling unit. According to one embodiment the system comprises a centrifuge for centrifuging cuvettes containing samples, particularly to sediment particulates contained in the samples to be imaged, before being fed to the cuvette handling unit. The centrifuge is operatively connected to the cuvette feeder such that a port for cuvette inlet before centrifugation is aligned with said first portion of the cuvette feeder and a port for cuvette outlet after centrifugation is aligned with said second portion of the cuvette feeder. The port for cuvette inlet and the port for cuvette outlet are preferably located on the same outer side of the centrifuge and aligned with each other so that to form a bridge between first portion and second portion of the cuvette feeder. This is the lowermost position of the cuvette in the centrifuge and it is oriented horizontally for preventing tangential displacement of the sediment after centrifugation. Thus centrifugation starts and ends at the same position. An example of suitable centrifuge is disclosed e.g. in EP 0 865 604 B1.

According to the present invention the system comprises an integrated and reusable test target. A test target is a solid material, typically substantially flat, made e.g. of glass, with a patterned surface, produced e.g. by lithography. The test target of the invention is designed to test one or more of selected parameters of the imaging unit such as resolution, contrast, modulation transfer function (MTF), focusing, depth of field, distortion and telecentricity. Test targets may comprise positive patterns, i.e. clear background and opaque pattern, e.g. metal pattern, such chrome pattern, or negative patters, i.e. clear pattern and opaque background, e.g. chrome background. For the imaging system of the invention a test target with negative pattern may be more advantageously used. Test targets are in general known in the art and may be commercially available. These are typically used for the manual check of imaging systems, in certifying proper measurements, in establishing a baseline between systems working in parallel, or for troubleshooting. Examples of suitable targets comprise e.g. a USAF 1951 test pattern.

According to one embodiment the test reusable target has the footprint of a cuvette or of the imaging space of a cuvette.

According to the invention one or more reusable test targets are installed or built in the system, preferably at the moment of system manufacturing. Particularly, one test target may be designed to test one or more selected parameters of the imaging unit. Alternatively, different test targets may be used to test different selected parameters of the imaging unit.

According to a preferred embodiment the cuvette handling unit comprises a cuvette section for receiving and transporting at least one cuvette at a time and a test target section comprising the reusable test target, wherein the reusable test target remains in the cuvette handling unit and is used and reused as necessary or programmed. Thus in this case, the cuvette handling unit is bifunctional with a section for receiving and transferring every time a new cuvette and with a section carrying one or more reusable test targets.

The test target section may be embodied as a gripper with side arms complementary to the shape of a test target or as a frame with empty space inside to be occupied by a test target and for allowing illumination and imaging of the test target. The test target may be fixed, e.g. be integral part, or attached or secured by chemical and/or physical means to the test target section. Alternatively, the reusable test target may be comprised in a test target storing compartment of the system and inserted in the test target section of the cuvette handling unit when it is needed. For example, the test target storing compartment may comprise more that one test target, e.g. to test different selected parameters of the imaging unit, and the test target storing section may be operatively connected to the cuvette handling unit so that the right test target is selected.

Alternatively, the system may comprise a test target handling unit separated and different from the cuvette handling unit, for transporting the test target to the imaging position or for inserting a test target into the test target section of the cuvette handling unit. According to a preferred embodiment, the cuvette handling unit is a robotic arm comprising a cuvette section and a test target section and is capable of assuming, e.g. by rotational movement several operational positions, one feeding position wherein the cuvette receiving section is aligned with the cuvette feeder for receiving one cuvette and at least a first and a second imaging position wherein in the first imaging position a cuvette in the cuvette section is aligned with the imaging unit and wherein in the second imaging position the test target in the test target section is aligned with the imaging unit. More imaging positions may be assumed if more test targets are installed. Further, the robotic arm may assume a disposal position for disposing the cuvette after imaging.

The system of the present invention further comprises a controlling unit. As used herein a controlling unit is a computational system such as a computer, a microprocessor, an embedded system, a microcontroller or other integrated circuit which is capable of being programmed and executing machine executable instructions. Specifically, the controlling unit is being set up to take images of the reusable test target, to evaluate said images of the reusable test target, to check from the result of said image evaluation whether the imaging unit is system-conform or non-system-conform. The controlling unit may also be set up to check whether the imaging unit is close-to-non-system-conform. Particularly, the controlling unit is being set up to provide a set of machine readable instructions or signals that instruct the system of the invention to perform specific tasks of quality control and to react accordingly depending on the outcome of said tasks.

Generally, the term system-conform refers to a status of the imaging unit corresponding to a properly working status which satisfies the system requirements, according to an originally set standard. The term non-system-conform refers to a status of the imaging unit corresponding to a non-properly working status which does not satisfy the system requirements, according to an originally set standard. The term close-to-non-system-conform refers to a status which lays at or near the boundaries between system-conformity and non-system-conformity, corresponding to a critical working status, which may require verification of any image or image evaluation taking place.

More particularly, the controlling unit receives the results of the test target imaging and uses the test results to generate control instructions. The controlling unit instructs the system, e.g. the cuvette handling unit, to transport the reusable test target into the imaging position and the imaging unit to take one or more images of the reusable test target. The controlling unit compares then said images of the reusable test target with a condition corresponding to expected degrees of selected parameters of the imaging unit defined by predetermined upper and lower limit values or threshold values. This instruction may be executed at programmed times as desired, e.g. at system start-up, at interval of times during operation of the system, or even before each new sample is imaged, i.e. a new cuvette is transported into the imaging position. If the measured degrees of the selected parameters, e.g. focusing and resolution, fall within the expect range, i.e. between the allowed upper and lower limits then the controlling unit assigns to the imaging unit a status of system-conformity, i.e. the imaging unit is said to be system-conform. If the measured degrees of the selected parameters fall outside of the expected range, the controlling unit assigns to the imaging unit a status of non-system-conformity, i.e. the imaging unit is said to be non-system-conform. The controlling unit may further distinguish between a status of system-conformity and a status of close-to-non-system-conformity. For example, if the measured degrees of the selected parameters fall at or near the boundaries of the expected range but within the range, e.g. within 20% from the upper or lower limits of the range, the controlling unit assigns to the imaging unit a status of close-to-non-system-conformity, i.e. the imaging unit is said to be close-to-non-system-conform or in a critical alert status. Analogously, if the measured degrees of the selected parameters fall within the range and sufficiently far from the boundaries of the expected range, e.g. at least 20% far from the inner upper or lower limits of the range, the controlling unit assigns to the imaging unit a status of system-conformity, i.e. the imaging unit is said to be system-conform.

If the imaging unit is found to be system-conform the controlling unit instructs the system, e.g. the cuvette handling unit to transport a new cuvette to the imaging position and the imaging unit to take one or more images of the sample in the imaging space of the cuvette. This may include previous steps such as cuvette feeding from the cuvette loading area, pipetting a sample from a sample tube into the new cuvette, centrifuging the cuvette containing the sample.

If the imaging unit is found to be non-system-conform the controlling unit instructs the system to interrupt at least temporarily cuvette transport and/or sample imaging. This means that no new samples are processed until the status of system-conformity is re-established. Interruption may occur at different levels, e.g. a cuvette may be left on hold on the cuvette handling unit, or on the cuvette feeder if it has already been prepared for imaging, otherwise the controlling unit may prevent a new sample to be introduced into a new cuvette or even prevent a new sample to be introduced in the system.

If the imaging unit is found to be close-to-non-system-conform the controlling unit instructs the system to continue to operate as it was system-conform but it sends an alert and/or flags any sample image taken in this status of close-to-non-system-conformity as uncertain, so that the user is made aware that verification of the result may be required.

The controlling unit may be set up to attempt to adjust the imaging unit if found to be non-system-conform or close-to-non-system-conform in order to re-establish a condition of system-conformity and if said attempt to re-establish the condition of system-conformity fails to prompt for repairing or replacing at least part of the imaging unit. This means that if the imaging unit is found to be e.g. non-system-conform the controlling unit instructs the system to adjust the imaging unit until the condition corresponding to the expected degree of selected parameters, such as focusing and resolution, is achieved and system-conformity is re-established. This instruction may comprise other instructions such as varying the height of the imaging position in relation to the imaging unit, moving one or more optical components of the imaging unit, such as lenses, objectives, mirrors, varying apertures and depth of field, varying sensitivity or other parameters of the detector, and repeating imaging of the test target when variations are made. Any of these instructions may be repeated a predetermined number of times and according to a predetermined sequence, after which if the imaging unit is still non-system-conform the controlling unit assigns the imaging unit a defect status. If the imaging unit is found to be defected, the controlling unit may prompt for service repair or replacement of the imaging unit or part of it and interrupt any sample processing until it reveals that the imaging unit has returned to system-conformity by performing any of the above controls.

The controlling unit may be set-up to control all system functions and operations. Alternatively, the system of the invention may further comprise a central processing unit separated from the controlling unit or comprising the controlling unit. As used herein a central processing unit is a computational system such as a computer, a microprocessor, an embedded system, a microcontroller or other integrated circuit which is capable of being programmed and executing machine executable instructions. Specifically, the central processing unit may be set up to process the digital signals received from the imaging unit via the controlling unit. The central processing unit may be set up to run a real-time operating system (RTOS), which is a multitasking operating system intended for real-time applications. In other words the system processor is capable of managing real-time constraints, i.e. operational deadlines from event to system response regardless of system load. It controls in real time that different units within the system operate and respond correctly according to given instructions.

According to a preferred embodiment, the system of the present invention comprises image evaluation means such as pattern recognition software to examine sample images and determine the identity, the presence or absence, the quantity, the morphology of different kinds of particulate matter contained in the samples for diagnostic purpose. The same or different software may be used for pattern recognition of the reusable test target when the controlling unit checks if the imaging unit is system-conform or non-system-conform.

The process of image evaluation may comprise saving digital sample images on an electronic storage medium, automatic evaluation and generation/storage of result in paper or electronic form, prompting to visual/manual evaluation if the software recognizes uncertainties in the automatic evaluation.

The present invention thus also refers to a method for checking at least whether an imaging unit is sytem-conform or non-system-conform comprising the steps of
a) providing a system comprising an imaging unit, a reusable test target, a controlling unit,
b) transporting the reusable test target into an imaging position,
c) taking one or more images of the reusable test target by means of the imaging unit,
d) evaluating said images of the reusable test target by means of the controlling unit by extracting data corresponding to measured degrees of selected parameters of the imaging unit and comparing said measured data with reference data corresponding to expected degrees of selected parameters of the imaging unit defined by predetermined upper and lower limit values,
e) assigning a status of system-conformity to the imaging unit if the measured degrees of the selected parameters fall within the expected range,
f) assigning a status of non-system-conformity to the imaging unit if the measured degrees of the selected parameters fall outside the expected range.

The method may comprise the step of checking whether the imaging unit is close-to-non-system-conform and assigning a status of close-to-non-system-conformity to the imaging unit if the measured degrees of the selected parameters fall at or near the boundaries of the expected range.

The present invention also refers to a method for imaging a series of biological samples comprising the steps of
a) providing a system comprising an imaging unit, a cuvette handling unit, a reusable test target, a controlling unit,
b) checking by means of the controlling unit whether the imaging unit is system-conform or non-system-conform by transporting the reusable test target into an imaging position, taking one or more images of the reusable test target by means of the imaging unit and evaluating said images of the reusable test target by means of the controlling unit by extracting data corresponding to measured degrees of selected parameters of the imaging unit, comparing said measured data with reference data corresponding to expected degrees of selected parameters of the imaging unit defined by predetermined upper and lower limit values, assigning a status of system-conformity to the imaging unit if the measured degrees of the selected parameters fall within the expected range, assigning a status of non-system-conformity to the imaging unit if the measured degrees of the selected parameters fall outside the expected range,
c) transporting a cuvette containing a sample to be analyzed onto the imaging position by means of the cuvette handling unit if the imaging unit is found to be system-conform,
d) imaging the sample contained in the cuvette by means of the imaging unit,
e) repeating one or more of the steps b) to d) as necessary,
f) interrupting at least temporarily cuvette transport and/or sample imaging by means of the control unit if the imaging unit is found to be non-system-conform,

The method may comprise the step of assigning a status of close-to-non-system-conformity to the imaging unit if the measured degrees of the selected parameters fall at or near the boundaries of the expected range and sending an alert if the imaging unit is found to be close-to-non-system-conformity and/or flagging any sample image taken in this status as uncertain.

The method may comprise the step of adjusting the imaging unit until a status of system-conformity is assigned.

The method may comprise the step of prompting for repairing or replacing the imaging unit if the status of system-conformity cannot be assigned.

The method may comprise one or more of the following steps:
- saving digital sample images on an electronic storage medium,
- evaluating said sample images by software,
- prompting to visual evaluation if uncertainties in software evaluation arise.

### Brief Description of the Drawings

In the following some embodiments of the invention will be described, by way of examples only, and with reference to the drawings in which:
Figure 1 shows schematically an embodiment of a system for imaging biological samples.
Figure 2 shows schematically a cuvette handling unit during the phase of cuvette feeding.
Figure 3 shows schematically the cuvette handling unit of Figure 2 during the phase of sample imaging.
Figure 4 shows schematically the cuvette handling unit of Figure 2 and 3 during the phase of reusable test target imaging and cuvette disposal.

### Detailed description of the invention

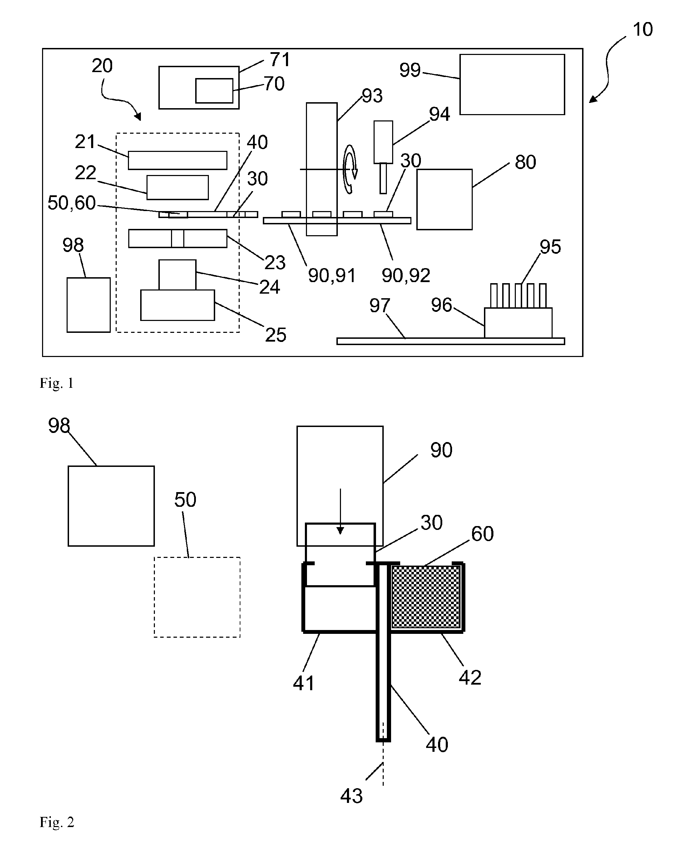

Figure 1 shows schematically a sediment analyzer system 10 for imaging urine samples comprising an imaging unit 20 for imaging samples in cuvettes 30, a cuvette handling unit 40 for transporting cuvettes 30 containing samples to be imaged into an imaging position 50, a reusable test target 60 and a controlling unit 70 being set up to check whether, based on imaging of the reusable test target, the imaging unit 20 is system-conform and to interrupt at least temporarily cuvette transport and/or sample imaging if the imaging unit 20 is non-system-conform. The imaging unit 20 comprises a lamp 21 as light source, a condenser lens 22, a microscope stage 23, an objective 24 and a detector 25. The condenser lens 22, objective lens 24, and detector 25 are optically arranged so that the lamp 21 illuminates the imaging space of a cuvette 30 or the reusable test target 60 when it is in an imaging position 50 through the condenser lens 22 and the image of any sample sediment within the cuvette space or of the reusable sample target 60 surface is captured through the objective lens 24 by the detector 25. The detector 25 is a CCD camera.

The system comprises a cuvette loading area 80 for introducing several cuvettes 30 at a time. Particularly, the cuvettes 30 are loaded into the cuvette loading area 80 as a stack of several cuvettes (not shown), which is sealed in a sterile container and is opened at the moment of loading. Several of these containers may be loaded at one time into the cuvette loading area 80.

The system 10 comprises a cuvette handling unit 40 for transporting cuvettes 30 containing samples to be imaged into the imaging position 50 of the imaging unit.

Samples are introduced into the system 10 contained in sample tubes 95. The sample tubes 95 may be contained in sample tube racks 96. The system 10 thus contains a rack loading area (not shown) for loading one or several racks 96 at a time into the system 10. The system 10 further comprises a conveyor unit 97 to move the racks 96 within the system 10.

The system 10 comprises also a pipetting unit 94 for introducing aliquots of samples from sample tubes 95 into cuvettes 30. The pipetting unit 94 comprises one reusable and washable needle for pipetting samples. The system 10 comprises also a washing unit (not shown) for washing the needle.

The system 10 comprises also a cuvette feeder 90 for feeding cuvettes 30 to the cuvette handling unit 40. The cuvette feeder 90 is located between the cuvette loading area 80 and the cuvette handling unit 40 and is embodied as a conveyor transporting cuvettes 30 one after another.

The cuvette feeder 90 is divided into a first portion 92 operatively connected to the cuvette loading area 80 and a second portion 91 operatively connected to the cuvette handling unit 40.

The system 10 comprises also a centrifuge 93 for centrifuging cuvettes 30 containing samples, particularly to sediment particulates contained in the samples to be imaged, before being fed to the cuvette handling unit 40. The centrifuge 93 is operatively connected to the cuvette feeder 90 such that a port for cuvette inlet before centrifugation is aligned with said first portion 92 of the cuvette feeder 90 and a port for cuvette outlet after centrifugation is aligned with said second portion 91 of the cuvette feeder 90. The port for cuvette inlet and the port for cuvette outlet are located on the same outer side of the centrifuge and aligned with each other so that to form a bridge between first portion 92 and second portion 91 of the cuvette feeder 90. This is the lowermost position of the cuvette 30 in the centrifuge 93 and it is oriented horizontally for preventing tangential displacement of the sediment after centrifugation.

A sample is introduced into a cuvette 30 by aligning the pipetting unit 94 with the inlet aperture of a cuvette 30 in the first portion 92 of the cuvette feeder 90 before the cuvette 30 enters in the centrifuge 93.

Figures 2 to 4 show schematically an example of cuvette handling unit 40 during different phases of operation. Particularly, the cuvette handling unit 40 is a robotic arm comprising a cuvette section 41 for receiving and transporting one cuvette 30 at a time and a test target section 42 comprising the reusable test target 60, wherein the reusable test target 60 remains in the cuvette handling unit 40, i.e. in the test target section 42 of the cuvette handling unit 40, and is used and reused as necessary or programmed. Thus in this case, the cuvette handling unit 40 is bifunctional with a section 41 for receiving and transferring every time a new cuvette 30 and with a section 42 carrying one fixed reusable test target 60.

The system 10 comprises also a cuvette disposal mechanism (not shown) for disposing cuvettes 30 after sample imaging into a waste compartment 98. The cuvette disposal mechanism is operatively connected to the cuvette handling unit 40 so that a cuvette 30 is disposed into a waste compartment 98 by pulling the cuvette 30 out of the cuvette section 41 when the waste compartment 98 and the cuvette section 41 are aligned.

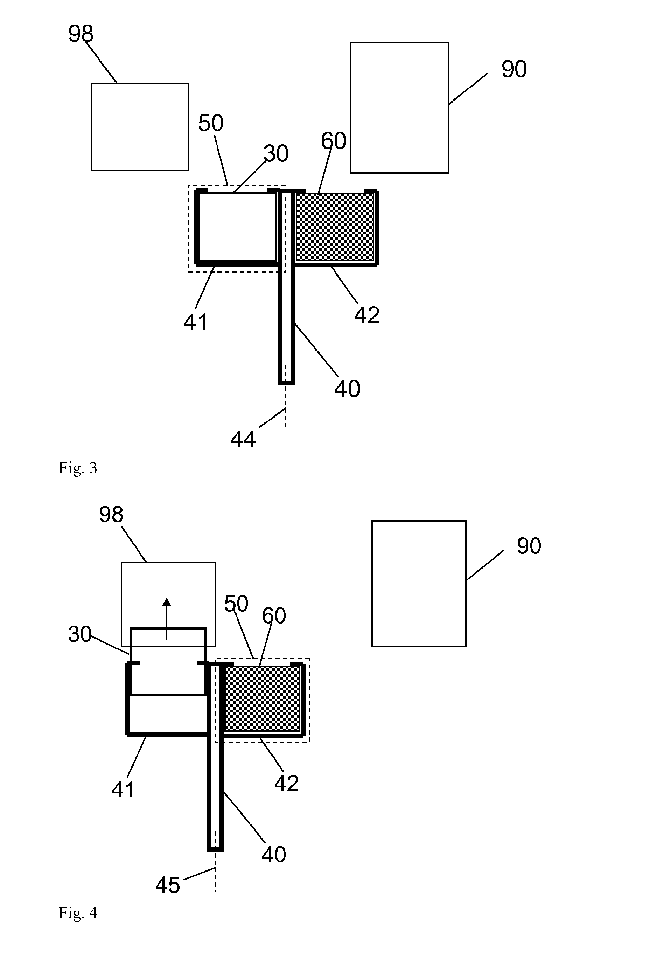

The cuvette handling unit 40 is capable of assuming, in this case by linear movement, different operational positions. Figure 2 shows the cuvette handling unit 40 in a first operational position 43 wherein the cuvette receiving section 41 is aligned with the cuvette feeder 90 for receiving one cuvette 30. Figure 3 shows the cuvette handling unit 40 in a second operational position 44 wherein the cuvette 30 in the cuvette section 41 is in the imaging position 50 for imaging the sample contained therein. Figure 4 shows the cuvette handling unit 40 in a third operational position 45 wherein the cuvette 30 in the cuvette section 41 is aligned with the waste compartment 98 for disposing the cuvette 30 after imaging and before returning to the first operational position 43 forreceiving a new cuvette 30. In this embodiment, advantageously, the test target 60 in the test target section 42 is at the same time in the imaging position 50 for imaging of the test target 60. Thus the cuvette handling unit 40 assumes a first imaging position for imaging the sample in the cuvette 30 and a second imaging position for imaging the test target 60, wherein test target imaging and cuvette disposal occur with the cuvette handling unit 40 in the same operational position 45.

Of course it is possible that test target imaging and cuvette disposal occur with the cuvette handling unit 40 at different operational positions and with different orders.

More operational and/or imaging positions may be assumed if e.g. more test targets 60 are installed or if more cuvettes 30 at a time are transported by the cuvette handling unit 40. Operations may take place in a different order as instructed by a controlling unit 70 and/or a central processing unit 71.

As shown in figure 1, the system 10 comprises a controlling unit 70. The controlling unit 70 is being set up to self-check whether, based on imaging of the reusable test target 60, the imaging unit 20 is system-conform and to interrupt at least temporarily cuvette transport and/or sample imaging if the imaging unit 20 is non-system-conform.

Particularly, the controlling unit 70 instructs the cuvette handling unit 40, to transport the reusable test target 60 into the imaging position and the imaging unit 20 to take one or more images of the reusable test target 60. The controlling unit 70 receives the results of the test target imaging and uses the test results to generate further control instructions. The controlling unit 70 compares the images of the reusable test target 60 with a condition corresponding to expected degrees of selected parameters of the imaging unit 20 defined by predetermined upper and lower limit values or threshold values. If the measured degrees of the selected parameters, e.g. focusing and resolution, fall between the allowed upper and lower limits, then the controlling unit 70 assigns to the imaging unit 20 a status of system-conformity. If the measured degrees of the selected parameters fall outside of the expected range, the controlling unit 70 assigns to the imaging unit 20 a status of non-system-conformity. If the measured degrees of the selected parameters fall at or near the boundaries of the expected range, the controlling unit assigns to the imaging unit a status of close-to-non-system-conformity.

If the imaging unit 20 is found to be system-conform the controlling unit 70 instructs the system 10 to prepare a new cuvette 30, i.e. pipette a new sample into a new cuvette 30 by pipetting unit 94, centrifuge the cuvette 30 in the centrifuge 93, feed the cuvette 30 with centrifuged sample to the cuvette handling unit 40 in order to transport the new cuvette to the imaging position 50 and instructs the imaging unit 20 to take one or more images of the sample in the imaging space of the cuvette 30.

If the imaging unit 20 is found to be non-system-conform the controlling unit 70 instructs the system 10 to interrupt at least temporarily further sample processing until the status of system-conformity is re-established.

If the imaging unit 20 is found to be close-to-non-system-conform the controlling unit 70 instructs the system 10 to continue to operate as it was system-conform but it sends an alert and flags any sample image taken in this status of close-to-non-system-conformity as uncertain, so that the user is made aware that verification of the result may be required.

The controlling unit 70 is being set up to attempt to re-adjust the imaging unit 20 if found to be non-system-conform or close-to-non-system-conform in order to re-establish the condition of system-conformity and if said attempt to re-establish the condition of system-conformity fails to prompt for repairing or replacing the defected part of the imaging unit 20.

The system of the present invention comprises pattern recognition software to examine sample images and determine the identity, the presence or absence, the quantity, the morphology of different kinds of particulate matter contained in the samples for diagnostic purpose. The system 10 is capable of automatic image processing comprising saving digital sample images on an electronic storage medium, automatic evaluation and generation/storage of result in paper or electronic form. The system 10 allows however also to intervene manually for image evaluation.

A display 99 for displaying images is also shown in figure 1. Image processing by pattern recognition software as well as visualization may however occur via a computer and separate screen connected to the system 10.

## Claims

1. System (10) for imaging biological samples comprising
- an imaging unit (20) for imaging samples in cuvettes (30),
- a cuvette handling unit (40) for transporting cuvettes (30) containing samples to be imaged into an imaging position (50),
- a reusable test target (60),
- a controlling unit (70) being set up to take images of the reusable test target (60), to evaluate said images of the reusable test target (60), to check from the result of said image evaluation whether the imaging unit (20) is system-conform and to interrupt at least temporarily cuvette transport and/or sample imaging if the imaging unit (20) is found to be non-system-conform.

2. The system according to claim 1 wherein the controlling unit is further set up to check whether the imaging unit is close-to-non-system-conform and to send an alert and/or flag any sample image taken in this status of close-to-non-system-conformity as uncertain.

3. The system according to claim 1 or 2 wherein the imaging unit comprises an automatic microscope and a detector (25) with multiple sensitive elements to obtain digital images of the samples.

4. The system according to any of the preceding claims wherein the cuvette handling unit comprises a cuvette section (41) for receiving and transporting at least one cuvette (30) at a time and a test target section (42) comprising the reusable test target (60).

5. The system according to any of the preceding claims wherein the system comprises a cuvette feeder (90) for feeding cuvettes to the cuvette handling unit (40).

6. The system according to claim 5 comprising a centrifuge (93) operatively connected to the cuvette feeder (90) for centrifuging cuvettes (30) containing samples to be imaged.

7. The system according to any of the preceding claims comprising a cuvette disposal mechanism for disposing cuvettes (30) after sample imaging.

8. The system according to any of the preceding claims wherein the controlling unit (70) is being set up to attempt to re-adjust the imaging unit (20) if found to be non-system-conform or close-to-non-system-conform in order to re-establish a condition of system-conformity and if said attempt to re-establish the condition of system-conformity fails to prompt for repairing or replacing at least part of the imaging unit (20).

9. Method for checking whether an imaging unit (20) is system-conform or non-system-conform comprising the steps of
a) providing a system (10) comprising
- an imaging unit (20),
- a reusable test target (60),
- a controlling unit (70),
b) transporting the reusable test target (60) into an imaging position (50),
c) taking one or more images of the reusable test target (60) by means of the imaging unit (20),
d) evaluating said images of the reusable test target (60) by means of the controlling unit (70), by
- extracting data corresponding to measured degrees of selected parameters of the imaging unit (20),
- comparing said measured data with reference data corresponding to expected degrees of selected parameters of the imaging unit (20) defined by predetermined upper and lower limit values,
e) assigning a status of system-conformity to the imaging unit (20) if the measured degrees of the selected parameters fall within the expected range,
f) assigning a status of non-system-conformity to the imaging unit (20) if the measured degrees of the selected parameters fall outside the expected range,

10. The method according to claim 9 comprising the step of checking whether the imaging unit is close-to-non-system-conform and assigning a status of close-to-non-system-conformity to the imaging unit if the measured degrees of the selected parameters fall at or near the boundaries of the expected range.

11. Method for imaging a series of biological samples comprising the steps of
a) providing a system (10) comprising
- an imaging unit (20),
- a cuvette handling unit (40),
- a reusable test target (60),
- a controlling unit (70),
b) checking by means of the controlling unit (70) whether the imaging unit is system-conform or non-system-conform by
- transporting the reusable test target (60) into an imaging position (50),
- taking one or more images of the reusable test target (60) by means of the imaging unit (20),
- evaluating said images of the reusable test target (60) by means of the controlling unit (70), by
- extracting data corresponding to measured degrees of selected parameters of the imaging unit (20),
- comparing said measured data with reference data corresponding to expected degrees of selected parameters of the imaging unit (20) defined by predetermined upper and lower limit values,
- assigning a status of system-conformity to the imaging unit (20) if the measured degrees of the selected parameters fall within the expected range,
- assigning a status of non-system-conformity to the imaging unit (20) if the measured degrees of the selected parameters fall outside the expected range,
c) transporting a cuvette (30) containing a sample to be analyzed onto the imaging position (50) by means of the cuvette handling unit (40) if the imaging unit (20) is found to be system-conform,
d) imaging the sample contained in the cuvette (30) by means of the imaging unit (20),
e) repeating one or more of the steps b) to d) as necessary,
f) interrupting at least temporarily cuvette transport and/or sample imaging by means of the control unit (70) if the imaging unit (20) is found to be non-system-conform.

12. The method according to claim 11 comprising the step of assigning a status of close-to-non-system-conformity to the imaging unit (20) if the measured degrees of the selected parameters fall at or near the boundaries of the expected range and sending an alert if the imaging unit (20) is found to be close-to-non-system-conformity and/or flagging any sample image taken in this status as uncertain.

13. The method according to any of the claims 9 to 12 comprising the step of adjusting the imaging unit (20) until a status of system-conformity is assigned.

14. The method according to any of the claims 9 to 13 comprising the step of prompting for repairing or replacing at least part of the imaging unit (20) if the status of system-conformity cannot be assigned.

15. The method according to any of the claims 11 to 14 comprising one or more of the following steps
- saving digital sample images on an electronic storage medium,
- evaluating said sample images by software,
- prompting to visual evaluation if uncertainties in software evaluation arise.
